# EUROPEAN PATENT SPECIFICATION

(11) **EP 2 586 537 B1**
(45) Date of publication and mention of the grant of the patent: **12.08.2015**
(21) Application number: 11380089.0
(22) Date of filing: 31.10.2011
(51) Int. Cl.: B05C 17/005, F16B 19/00, F16B 33/00, B05C 5/02

(54) **Nozzle for applying sealants with bell or hood tip and injection button**
Düse zum Aufbringen von Abdichtmitteln mit Glocken- oder Haubenspitze und Injektionsknopf
Buse pour appliquer des produits d'étanchéité dotée d'une extrémité cloche ou coiffe et d'un bouton d'injection

(43) Date of publication of application: 01.05.2013
(73) Proprietor: Jurado Blázquez, Miguel, 28018 Madrid (ES)
(72) Inventor: Jurado Blázquez, Miguel, 28018 Madrid (ES)
(74) Representative: Sanchez del Campo Gonzalez de Ubierna, Ramón

(56) References cited:
- EP-A1- 1 837 085
- US-A- 3 379 167
- US-A1- 2009 217 868

## Description

### OBJECT OF THE INVENTION

As its title states, the invention relates to a nozzle for applying sealants with a bell or hood tip and an injection button, which provides several advantageous and novel characteristics for its intended function inherent to its innovative organisation and construction, which will be described in detail further below, and which represent a considerable improvement with respect to what is currently known in the market in its field of application.

More specifically, the object of the invention relates to a nozzle of the type which, when incorporated in a cartridge or injection machine, is meant to facilitate the injection of silicone or other sealants in multiple industrial applications, of the type having an outlet shaped as a bell or hood meant to facilitate the encapsulation of rivets or screws, particularly applicable in the aeronautical industry, having the innovative characteristic that it also has a button which, coupled to the end of said bell or hood, has a special design with a number of channels and orifices for carrying out sealing operations with greater accuracy, allowing to guide the injection of the sealant around the rivets and nuts, as well as in the walls of the orifices in which these are inserted, thereby substantially improving the encapsulation and providing an optimum sealing of these points, so that these operations can be performed both manually and by automated sealant injection machines.

### FIELD OF APPLICATION OF THE INVENTION

The field of application of the present invention falls within the technical sector of the industry related to manufacturing accessories for applying silicones and similar sealants, specifically as regards nozzles with bell or hood tips for sealing rivets and nuts, which can be used in the aviation industry and the automotive, naval, railway and robotics industries.

### BACKGROUND OF THE INVENTION

Currently, by way of reference to the state of the art, it must be pointed out that although nozzles with bell or hood tips are known in the market e.g. EP1837085, the applicant is not aware of any of these having an injection button nor having technical, structural and constitution characteristics similar to those of the nozzle disclosed herein, which provides considerable advantages over existing conventional nozzles.

In this sense, it must be mentioned that although some disposable nozzles made of plastic are known, the nozzles considered herein are mostly metallic and reusable, particularly when they are meant to be used in injection machines, so that they must be cleaned with solvents or products specifically prepared for this purpose, which are hazardous in case of contact with the skin due to their abrasive nature. However, the main drawback of these nozzles is that their design does not allow their use with both manual cartridges and injection machines, nor in precision sealing operations involving injecting sealants in the chamfers in which rest the heads of rivets and screws or in the walls of orifices; thus, the intended object of the invention is to supply the market with a new nozzle that can solve these drawbacks in a practical and economic manner.

### DESCRIPTION OF THE INVENTION

The nozzle for applying sealants with a bell or hood tip and injection button disclosed by the invention is configured as a remarkable novelty in its field of application, as its implementation clearly makes it possible to fulfil the aforementioned optimum goals. The details of the invention that enable this and differentiate it from previously known nozzles are suitably described in the claims accompanying the present specification.

Specifically, what is disclosed by the invention, as stated above, is a nozzle for applying sealants of those having a bell or hood tip and with the characteristic of also having a button that can be coupled, when necessary, to the end of the bell or hood, this button being provided with a series of channels and orifices designed for precision sealing operations.

For this purpose, the nozzle disclosed is configured as a disposable device made of plastic, such as polypropylene (PP), and is made from a piece having three differentiated parts: a first part on its rear end, provided with a threading that allows coupling the nozzle to most cartridges or machines present in the market, with a ring after this threading in the form of a protruding lip that acts as a stop in the insertion of the cartridge and reinforces the area of greatest pressure, which is the union between the nozzle and the cartridge, allowing a precision adjustment; a central part formed conventionally by a truncated-cone shaped segment; and an anterior or outlet part that has a bell or hood shape, this shape being meant for encapsulating rivets or nuts in order to cover them completely in the sealing material.

In addition, in a characterising manner, the anterior bell-shaped part has a lip in the form on a protruding ring, in which an injection button is coupled such that it can be fitted and removed as many times as desired.

The design of this button, with channels and orifices, allows executing different precision sealing operations. Specifically, it allows directing the flow of sealing material in two different ways:
- Towards the chamfers in which the rivet heads are adjusted, by a series of radial channels that lead to through orifices made in an annular area of the central part of the button.
- And towards the walls of the orifice in which the screws are inserted, by means of lateral outlets provided in an alternative embodiment of the button which has a hollow central part. This prevents plugging the orifice in which the screw is inserted, which is important in order to allow its subsequent riveting.

These operations are performed after drilling orifices in the various claddings or parts to be joined, by a riveting that will consequently be fast, clean and uniform, since the appropriate doses of sealant have been applied at the specific points described, as enabled by this system.

In addition, the application of the sealant with the nozzle of the invention can be performed either manually, by cartridges filled with silicone or other sealing materials, or by an extrusion or manual gun, as those currently available in the market.

This provides a perfect seal from air and oxidising liquids, which is very important for the pressurisation and lifetime of an aircraft, ship, train or automobile.

Finally, it is worth mentioning that once the aforementioned sealing operations are performed, simply cutting the anterior part of the nozzle with a bell shape, a traditional truncated-cone shaped nozzle is obtained that can be used to apply sealing cords, filler sealant or safety cords that ensure that there is no liquid between two parts joined by rivets and leaving fully sealed the fuel tanks or other elements made from parts joined by rivets.

In short, the nozzle disclosed provides a device that simplifies the sealing work in both the aesthetic appearance and speed of execution, improving the application times.

In view of the foregoing, it can be seen that the described nozzle for applying sealants with a bell or hood tip and an injection button represents an innovative structure with structural and constitutive properties hitherto unknown it its field of application which, together with its practical application, provides it with sufficient grounds for obtaining the exclusivity privileges requested.

### DESCRIPTION OF THE DRAWINGS

To complete the description being made of the nozzle object of the invention and to aid a better understanding of the characteristics that distinguish it, the present specification is accompanied by a set of drawings that form an integral part of it, wherein for purposes of illustration and in a nonlimiting sense the following is shown:
Figure 1 shows a perspective view of an example of embodiment of the nozzle for applying sealants with a bell or hood tip and an injection button object of the invention, in which can be seen its general outer configuration and the main parts and elements that compose it.
Figure 2 shows a cross sectional view along a longitudinal line of the nozzle of the invention shown in the previous figure.
Figure 3 shows a plan view of the injection button incorporated in the nozzle of the invention, revealing its configuration with channels and orifices.
Figure 4 shows an enlarged view of inset A of figure 2, which reveals the configuration of the bell-shaped tip of the nozzle and the injection button that allows them to be coupled to each other.
Figures 5 to 8 respectively show perspective, sectional and plan views of the button and an enlargement of inset A', of another example of embodiment of the nozzle for applying sealants of the invention, in an embodiment in which the button is hollow in its centre and has lateral outlets for applying sealant to the walls of the orifices.

### PREFERRED EMBODIMENT OF THE INVENTION

In view of the aforementioned figures and according to the numbering system used, an example of a preferred embodiment of the invention can be seen that comprises the parts and elements described in detail below.

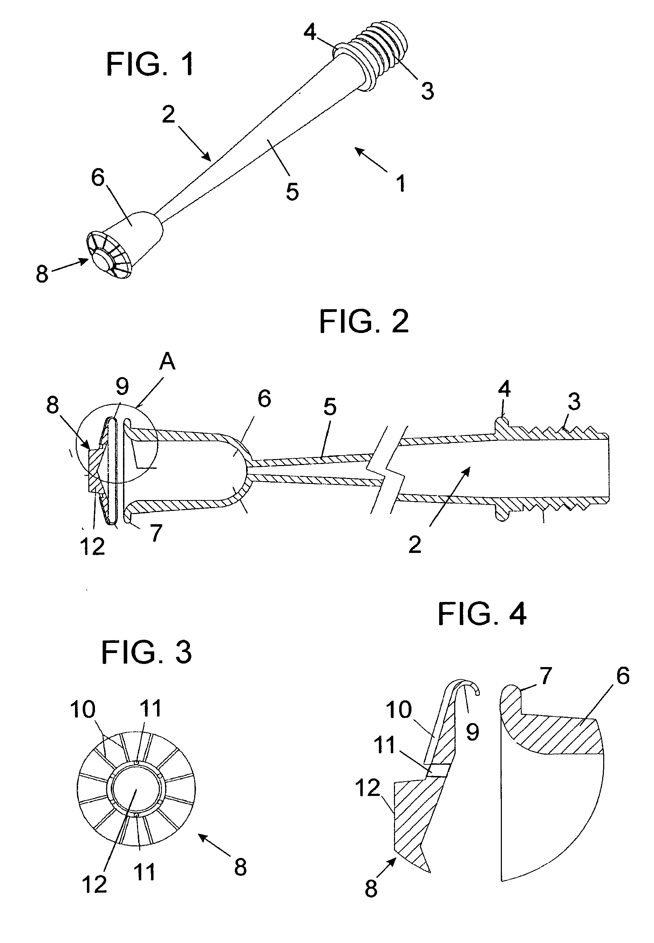

Thus, as shown in figures 1 to 4, the nozzle (1) meant to be incorporated in a cartridge, gun or injection machine for silicone or a similar sealant, is constructed with a body (2) of plastic material having three differentiated parts:
- a posterior threaded end (3) provided with a thread that allows coupling the nozzle to most cartridges or machines present in the market, after which the presence is foreseen of a protruding ring (4) that stops against the cartridge or gun to which it is coupled, as it is the union between the nozzle and the cartridge that establishes a precision adjustment;
- a central truncated-cone shaped segment (5) with a diameter that decreases from the posterior threaded end (3), where it is greater, towards the anterior part or end, where it is thinner.
- and a bell-shaped anterior end (6) through which the sealant is expelled and which is sized to encapsulate rivets or nuts in order to cover them completely with the sealing material.

In addition, the anterior bell-shaped part (6) has on its end a lip in the form or an annular protrusion (7) to which is coupled, such that it is possible to fit and remove the peripheral groove (9) of an injection button (8) such that it is disposed covering the mouth of said bell (6).

This injection button (8) has a number of radial channels (10) on its outer surface that lead to through orifices (11) placed peripherally in a central circular protrusion (12), which is slightly tapered and can be used as a guide in the correct positioning of the nozzle centred in the chamfered orifice for riveting parts which it is intended for. In this way, the sealant flow passes through the through orifices (11) and is led by the radial channels (10) to the chamfered area of the orifice in which rest the heads of the screws to be riveted, being distributed uniformly on it.

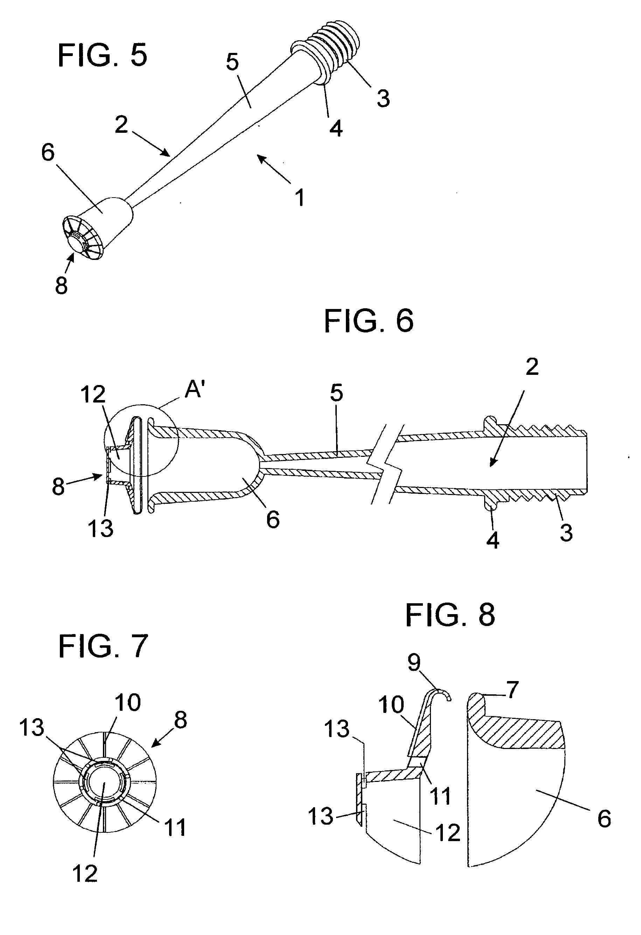

In addition, as shown in figures 5 to 8, said central circular protrusion (12) of the injection button (8) is hollow on the inside, and has lateral grooves (13) meant to allow the sealant to exit, in order to lead it to and deposit it in the walls of the orifices, without plugging them.

Having sufficiently described the nature of the present invention, as well as its practical execution, it is not considered necessary to extend this description for a person skilled in the art to understand its scope and the advantages that it provides, noting that, within its essence, it can be reduced to practice in different embodiments that differ in detail from that given by way of example, which will also be covered by the protection sought, provided its essence is not altered, changed or modified.

## Claims

1. NOZZLE FOR APPLYING SEALANTS WITH A BELL OR HOOD TIP AND AN INJECTION BUTTON, of those meant to be incorporated in a cartridge, gun or injection machine, configured by a body (2) with a threaded posterior end (3) and a ring (4) that acts as a stop, having a central truncated-cone shaped segment (5) and an anterior end in the form of a bell (6), **characterised** an injection button (8) is coupled to said bell-shaped anterior part (6) such that the former can be fitted and removed, disposed such that it covers the mouth of said bell (6), the injection button (8) having on its outer surface a series of radial channels (10) that lead to through orifices (11) provided peripherally around a central circular protrusion (12).

2. NOZZLE FOR APPLYING SEALANTS WITH A BELL OR HOOD TOP AND AN INJECTION BUTTON, according to claim 1, **characterised in that** in the mouth of the anterior bell-shaped part (6) there is a lip in the form of an annular protrusion (7) to which is coupled a peripheral groove (9) of the injection button (8).

3. NOZZLE FOR APPLYING SEALANTS WITH BELL OR HOOD TIP AND AN INJECTION BUTTON, according to claim 1 or 2, **characterised in that** the central circular protrusion (12) of the injection button (8) is hollow on its inside and is provided with lateral grooves (13).

## Patentansprüche

1. Düse zur Auftragung von Abdichtmitteln mit einer Glocken- oder Haubenspitze und einem Injeküonknopf für solche, die in eine Kartusche, Pistole oder Injektionsmaschine eingesetzt werden sollen, ausgestaltet durch einen Körper (2) mit einem hinteren Gewindeende (3) und einem Ring (4), der als Stopp wirkt, mit einem zentralen kegelstumpfförmigen Segment(5) und einem vorderen Ende in Form einer Glocke(6), **dadurch gekennzeichnet, dass** ein Injektionsknopf (8) an das glockenförmige vordere Teil (6) derart gekoppelt ist, dass ersteres angesetzt und entfernt werden kann und es so angeordnet ist, dass es den Mund der Glocke (6) bedeckt, wobei der Injektionsknopf (8) an seiner Außenseite eine Reihe von radialen Kanälen (10) aufweist, die zu durchgehenden Öffnungen (11) führen, die peripher um einen zentralen kreisförmigen Vorsprung (12) herum bereitgestellt sind.

2. Düse zur Auftragung von Abdichtmittel mit einer Glocken- oder Haubenspitze und einem Injektionsknopf nach Anspruch 1, **dadurch gekennzeichnet, dass** in dem Mund des vorderen glockenförmigen Teils (6) eine Lippe in Form eines ringförmigen Vorsprungs (7) vorhanden ist, an den eine periphere Rille (9) des Injektionsknopfes (8) gekoppelt wird.

3. Düse zur Auftragung von Abdichtmittel mit einer Glocken- oder Haubenspitze und einem Injektionsknopf nach Anspruch 1 oder 2, **dadurch gekennzeichnet, dass** der zentrale kreisförmige Vorsprung (12) des Injektionsknopfes (8) an seiner Innenseite hohl ist und mit lateralen Rillen (13) versehen ist.

## Revendications

1. BUSE POUR L'APPLICATION DE PRODUITS D'ÉTANCHÉITÉ AVEC POINTE EN CLOCHETTE OU CAPUCHON ET BOUTON D'INJECTION, de celles destinées à être assemblées sur une cartouche, pistolet ou machine d'injection, configurée à partir d'un corps (2) avec une extrémité arrière filetée (3) et un anneau (4) en guise de butée, avec un tronçon central tronconique (5) et avec une extrémité avant sous forme de clochette (6), **caractérisée en ce qu'**on couple à ladite partie avant sous forme de clochette (6), de manière à pouvoir le placer et l'enlever, un bouton d'injection (8), de manière qu'il est disposé en recouvrant l'embouchure de ladite clochette (6), ledit bouton d'injection (8) ayant sur sa surface extérieure une série de canaux radiaux (10) qui débouchent dans des orifices traversants (11) prévus périmétralement à une protubérance circulaire centrale (12).

2. BUSE POUR L'APPLICATION DE PRODUITS D'ÉTANCHÉITÉ AVEC POINTE EN CLOCHETTE OU CAPUCHON ET BOUTON D'INJECTION, selon la revendication 1, **caractérisée en ce que** l'embouchure de la partie avant sous forme de clochette (6) possède un rebord sous forme d'épaulement annulaire (7) sur lequel on couple un encastrement (9) périmétral du bouton d'injection (8).

3. BUSE POUR L'APPLICATION DE PRODUITS D'ÉTANCHÉITÉ AVEC POINTE EN CLOCHETTE OU CAPUCHON ET BOUTON D'INJECTION, selon la revendication 1 ou 2, **caractérisée en ce que** la protubérance circulaire centrale (12) du bouton d'injection (8) est intérieurement creuse, des rainures latérales (13) y ayant été prévues.
